# EUROPEAN PATENT APPLICATION

(11) **EP 4 197 676 A1**
(43) Date of publication of application: **21.06.2023**
(21) Application number: 21214756.5
(22) Date of filing: 15.12.2021
(51) Int. Cl.: B23B 51/06, B23B 51/00

(54) **DRILL WITH IMPROVED CHIP EVACUATION**

(71) Applicant: AB Sandvik Coromant, 811 81 Sandviken (SE)
(72) Inventor: Wikström, Erik, 776 90 Hedemora (SE); Nilsson, Lucas, 972 39 Luleå (SE)
(74) Representative: Sandvik

(57) **Abstract**

A drill 10 for metal cutting machining having a central rotation axis C defining a longitudinal direction of the drill 10 and around which the drill is rotatable, comprising: an axially front end 12, an axially rear end 14, an envelope surface 16 extending between the front end 12 and the rear end 14, a shaft 22 extending axially rearward from the front end 12, a shank 20 extending axially forward from the rear end 14, at least one cutting insert 18 releasably mounted at the front end 12, a first 25 and a second chip flute 26 in the envelope surface 16 of the shaft 22, a coolant chamber inside the shank 20, a first 27 and second 28 coolant channel extending from the front end of the coolant chamber and terminating at the front end 12 of the drill, the first coolant channel 27 is associated with the first chip flute 25 and the second coolant channel 28 is associated with the second chip flute 26, wherein the coolant chamber comprises a distributor device 40 adapted to intermittently distribute coolant to the first 27 and second coolant channel 28.

## Description

### TECHNICAL FIELD

The present invention relates to a drill for metal cutting machining, more particular to a drill for metal cutting machining with improved chip evacuation.

### BACKGROUND

Drilling is one of the most common machining operations in modern manufacturing and provides a reliable and cost effective method to make holes with high precision. During the drilling operation it is important to use a coolant to cool the drill and the work piece and thus prolong the lifetime of the drill and to improve the quality of the hole. The coolant passes through coolant channels in the drill which terminate at the front end of the drill. The coolant also evacuates chips produced in the drilling operation from the drill area via chip flutes in the envelope surface of the drill.

A problem that may occur during drilling, especially when drilling difficult to machine materials, such as, for example, Titanium alloys, is a phenomenon called chip jamming. Chip jamming is when machined chips gets stuck in a chip flute, between the surface of the chip flute and the wall of the drilled hole, thus to some extent or completely blocking the chip flute. Chip jamming is detrimental to the drilling process and may lead to a damaged drill tool and to an impaired quality of the drilled hole.

Therefore, it is a need for improvements in a drill for metal cutting machining such that chip jamming can be prevented or, if chip jamming has occurred, loosen the jammed chips to again achieve an unhindered flow in the chip flutes.

It is therefore an object of the present invention to present an improved drill for metal cutting machining with a decreased risk of chip jamming.

### SUMMARY

According to the present invention, the above mentioned object is achieved by means of a drill for metal cutting machining having the features defined in claim 1.

The drill for metal cutting machining according to the present invention comprises: a central rotation axis defining a longitudinal direction and around which the drill is rotatable, an axially front end, an axially rear end, an envelope surface extending between the front end and the rear end, a shaft extending axially rearward from the front end, a shank extending axially forward from the rear end, at least one cutting insert releasably mounted at the front end, a first and a second chip flute in the envelope surface of the shaft, a coolant chamber inside the shank, a first and second coolant channel extending from the front end of the coolant chamber and terminating at the front end of the drill. The first coolant channel is associated with the first chip flute and the second coolant channel is associated with the second chip flute. The coolant chamber comprises a distributor device adapted to intermittently distribute coolant to the first and second coolant channel.

The present inventors have realized that this configuration alleviates the problem with chip jamming. Intermittently distributed means that a burst of coolant will be followed by a short period of no, or a small amount, of coolant arriving at the coolant channel. Since the first coolant channel is associated with the first chip flute, the coolant flow in the first chip flute will also be intermittent. The same applies for the second coolant channel and the second chip flute. The intermittent flow of coolant in the chip flutes creates quick bursts of increased pressure in the chip flutes which more efficiently removes jammed chips compared to a drill having a continuous flow of coolant in the chip flutes. The intermittent flow of coolant also decreases the risk of chips getting jammed in the chip flutes compared to drills having a continuous flow of coolant in the chip flutes.

Associated with here means that a majority of the coolant flow from the first coolant channel reaches the first chip flute and a majority of the coolant flow from the second coolant channel reaches the second chip flute. The reason for this may be due to different design alternatives. That the first coolant channel terminates close to or in the first chip flute, that the outlet of the first coolant channel is directed towards the first chip flute or that the rotation of the drill implies that most of the coolant from the first coolant channel reaches the first chip flute. The same applies for the second coolant channel and the second chip flute. The invention is not limited to drills having two chip flutes and two coolant channels. For example, having more than one coolant channel terminating in a chip flute is possible. It is also possible to have a third coolant channel associated with a third chip flute and also a fourth, a fifth, etcetera.

Many different types of coolant can be used, for example a water-based coolant or an oil-based coolant.

According to one embodiment, the distributor device is entirely mechanical and automatically activated by a coolant supply to the coolant chamber.

This configuration is suitable and durable for the harsh conditions encountered when drilling in metallic materials. Distributor devices comprising electrical parts would be more susceptible to failure during the drilling operation. Having the distributor device being automatically activated by a coolant supply to the coolant chamber has the advantage that no outside assistance or actuators are needed to activate the distributor device.

According to one embodiment, the distributor device comprises a rotationally fixed flow re-directing element, at the rear end of the coolant chamber, adapted to re-direct the coolant flow from a principally axial flow to a principally radial flow and a rotatable impeller, at the front end of the coolant chamber, adapted to rotate when being subject to the radial flow from the flow re-directing element.

This configuration is an efficient way for distributing the flow of coolant intermittently between the first and the second coolant channel.

Preferably the flow re-directing element is rotationally fixed at the rear end of the coolant chamber using press fitting.

According to one embodiment, the impeller is a hollow cylinder with an inlet at its rear end and a generally arc-shaped outlet at its front end.

This configuration is suitable for use in an approximately cylindrical shank with an approximately cylindrical coolant chamber. Having an arc-shaped outlet implies that coolant will flow intermittently between the first and second coolant channel when the impeller rotates.

According to one embodiment, the outlet has the form of a truncated annulus.

According to one embodiment, the outlet occupies approximately half of a full annulus.

This configuration is especially effective when two coolant channels are used since each coolant channel will receive coolant from the outlet of the impeller half of the time the drill is in use. This leads to an intermittent flow of coolant that is effective in dislodging chips in the chip flutes.

According to one embodiment, the impeller has blades, oriented to initiate rotation of the impeller when subject to the radially directed coolant flow from the re-directing element, on the inside of the impeller.

According to one embodiment, the impeller has blades, oriented to initiate rotation of the impeller when subject to the radially directed coolant flow from the flow re-directing element, on the outside of the impeller.

This configuration with blades is an efficient way to initiate rotation of the impeller when subject to a flow of coolant. Kinetic energy from the coolant flow is transmitted to the blades which initiates rotation of the impeller.

According to one embodiment, the blades are positioned at a non-zero angle relative to the rotation axis.

With this configuration it is possible to adjust the rotational speed of the impeller and thus optimize the speed to achieve an intermittent flow in the chip flutes that is effective for removing jammed chips.

According to one embodiment, the flow re-directing element has an axially directed inlet at its rear end, a radially directed outlet at its front end, and a flow tube connecting the inlet and the outlet.

This configuration is an efficient way to re-direct the coolant flow from a principally axial flow to a principally radial flow.

According to one embodiment, the outlet of the flow re-directing element is radially offset from the rotation axis.

This configuration ensures that the coolant will hit the blades of the impeller approximately perpendicular to have an efficient transport of kinetic energy to the impeller.

According to one embodiment, the front end of the impeller has a central protrusion on the outside of the impeller.

This configuration ensures that there will always be a small amount of coolant between the front end of the coolant chamber and the front end of the impeller when the drill is in operation. This small amount of coolant ensures that the flow of coolant through a coolant channel never completely stops. This is beneficial for cooling the drill and the work piece.

According to one embodiment, the protrusion has the shape of a truncated cone.

With this configuration a column of coolant will form between the front end of coolant chamber and the front end of the impeller. This column of coolant acts as a lubricant and decreases the friction between the front end of the coolant chamber and the front end of the impeller. The impeller is thus easier to rotate. According to one embodiment, the drill has two axially extending arms at its front end, the arms spaced apart about the rotation axis to define a jaw, the cutting insert releasably mounted within the jaw between the arms.

With this configuration a single drill body can hold a variety of cutting inserts with varying geometries, allowing greater flexibility for optimum performance across multiple materials and applications.

According to one embodiment, the drill has a central cutting insert releasably mounted in an insert seat and a peripheral cutting insert releasably mounted in an insert seat.

This configuration ensures efficient drilling and allows the usage of indexable cutting inserts which improves the economy of the drill operation.

Further advantages of the present invention will appear from the description following below.

### LIST OF DRAWINGS

Embodiments of the invention will now be described in detail with regard to the annexed drawings, in which:
Figs 1a, b are perspective views of a drill according to an embodiment of the present invention with a first embodiment of the impeller.
Fig 2a is a side view of the drill shown in Fig. 1 with interior parts of the drill shown in dashed lines and rear parts of the drill cut away to show the interior. The impeller is here shown in a cross-section.
Fig. 2b is a side view of a drill according to another embodiment of the invention with a second embodiment of the impeller. Interior parts of the drill are shown in dashed lines and rear parts of the drill are cut away to show interior parts.
Fig. 3a is a perspective view of the first embodiment of impeller. The impeller being partially cut to show interior parts of the impeller.
Fig. 3b is a rear end view of the drill shown in Fig. 1 with the impeller from Fig. 3a mounted in the drill but without the flow re-directing element mounted.
Fig. 4a is a perspective view of the second embodiment of the impeller. The impeller being partially cut to show interior parts of the impeller.
Fig. 4b is a rear end view of the drill shown in Fig. 1 with the impeller from Fig. 4a mounted in the drill but without the flow re-directing element mounted.
Figs 5a, b are perspective views of a drill according to another embodiment of the invention with the second embodiment of the impeller.

### DETAILED DESCRIPTION OF EMBODIMENTS

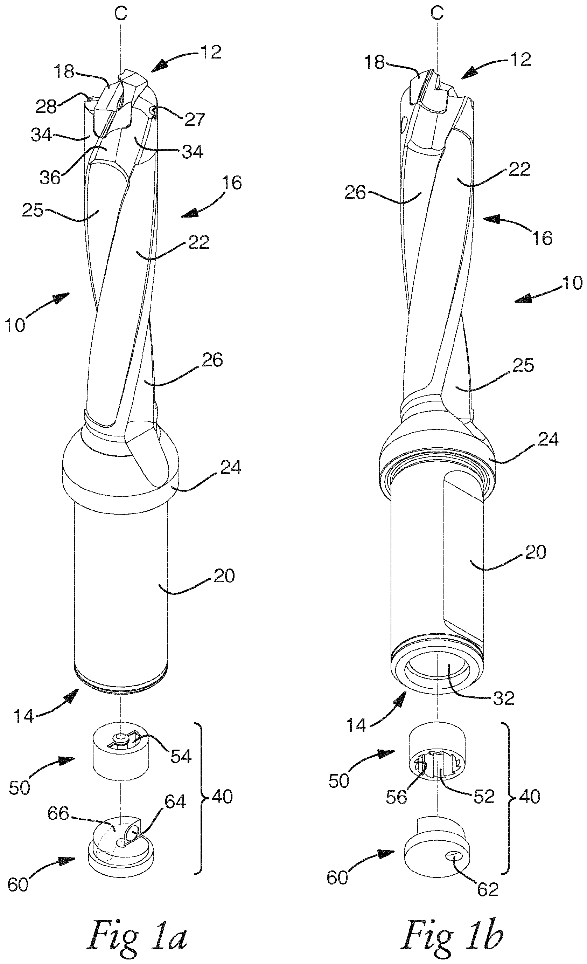

Reference is made to Fig. 1a-1b, which show a drill according to an embodiment of the invention. Such a drilling tool is a device which is adapted for use in metal or composite cutting operations, primarily drilling operations, but the drilling tool can also be used for helical interpolation, boring, plunging and turning operations. The drilling tool is arranged to be mounted or connected to a machine tool (not shown), such as a CNC machine, either directly or indirectly by one or more tool holders, to a tool spindle of the machine tool.

The drill, generally designated 10, has a central rotation axis (C) around which the drill is rotatable. The drill further has a front end 12, a rear end 14 and an envelope surface 16 that extends between the front end 12 and the rear end 14.

In the following description the front end of an element refers to the parts of the element that is closest to the front end 12 of the drill 10 when the element is mounted in the drill. Correspondingly, the rear end of an element refers to the parts of an element that is closest to the rear end 14 of the drill 10 when the element is mounted in the drill. Further, an axial direction refers to a direction parallel to the rotation axis (C) and a radial direction refers to a direction perpendicular to the rotation axis (C).

The drill 10 further has a shaft 22 extending axially rearward from the front end 12 of the drill 10 to a collar 24. A shank 20 extending axially forward from the rear end 14 of the drill 10 to the collar 24. The shank 20 is for attaching the drill 10 to a rotatable tool holder (not shown). The shaft 22 includes first 25 and second chip flutes 26 for transporting coolant and chips away from the bottom of a drilled hole. The first 25 and second chip flutes 26 preferably extends all the way to the collar 24 to be directed away from the hole by the collar 24. The first 25 and second chip flutes 26 are helically shaped around the shaft 22 for efficient cooling and transportation of chips. The front of the collar 24 has a generally conical shape and has a diameter that is larger than the diameter of the shaft 22 and larger than the diameter of the shank 20, to efficiently direct chips away from the hole and away from the rotatable tool holder. The rear side of the collar is perpendicular to the rotation axis to act as a stop when inserting the shank 20 in the rotatable tool holder.

Axially extending arms 34, forming a jaw 36 between them, are positioned at the front end 12 of the drill. A cutting insert 18 is mounted in the jaw 36 by threaded screws (not shown). The cutting insert 18 extends across the whole diameter of the drill 10 and comprises cutting edges that meet at the center of the cutting insert 18 at the rotation axis (C) of the drill 10. The cutting insert 18 further comprises chip channels that connect to the chip flutes 25, 26 of the drill 10. The drill 10 is thus what is usually called an exchangeable head drill.

A coolant chamber 32 is positioned at the rear end 14 of the drill. A distributor device 40 comprising a first embodiment of an impeller 50 and a flow redirecting element 60 is positioned in the coolant chamber 32. The impeller 50 is rotatable and positioned at the front end of the coolant chamber 32. The flow re-directing element 60 is rotationally fixed to the rear end of the coolant chamber 32 by press fitting. An inlet 62 at the rear end of the flow re-directing element 60 is connected to an external coolant source (not shown). The inlet 62 is directed axially and a flow tube 66, connecting the inlet 62 to an outlet 64, will re-direct the coolant flow from being principally axial to a principally radial flow at the outlet 64. The outlet 64 of the flow re-directing element 60 is radially offset from the rotation axis (C). The impeller 50 has the form of a hollow cylinder and has an inlet 52 at its rear end, an outlet 54 at its front end and blades 56 on the inside of the hollow cylinder. The cylinder is open at its rear end to form the inlet 52. The blades 56 are oriented along the rotation axis (C) and occupies the whole length of the inside of the cylinder. The blades 56, in a rotational direction, comprises curved surfaces interrupted by radially oriented walls. The curved surfaces direct coolant to the walls which will be hit by the coolant approximately perpendicularly. Kinetic energy in the coolant will thus be transferred to the impeller 50 to initiate rotation of the impeller 50. The front end of the cylinder is partially closed by a cap. The cap has an outlet 54 in the form of a hole in the cap. The outlet 54 has the form of a truncated annulus. The annulus occupies approximately half of a full annulus.

The flow re-directing element 60 has a circular flat cap at its rear end. The diameter of the cap is larger than the diameter of the front end of the coolant chamber 32 and approximately equal to the diameter of the rear end of the coolant chamber 32. The front end of the cap has a flat circular rim at its radially outermost end. This rim will lie against a surface of the coolant chamber 32 that is perpendicular to the rotation axis (C) when the flow redirecting element 60 is mounted in the drill. The cap further has an axially directed inlet 62 in the form of a circular hole radially offset from the rotation axis (C). The front end of the flow re-directing element 60 has a radially directed outlet 64, in the form of a circular hole with a diameter equal to the diameter of the circular hole at the inlet 62. A flow tube 66 connects the inlet 62 to the outlet 64. The flow tube 66 is bent to re-direct the flow of the coolant from being principally axial at the inlet 62 to being principally radial at the outlet 64.

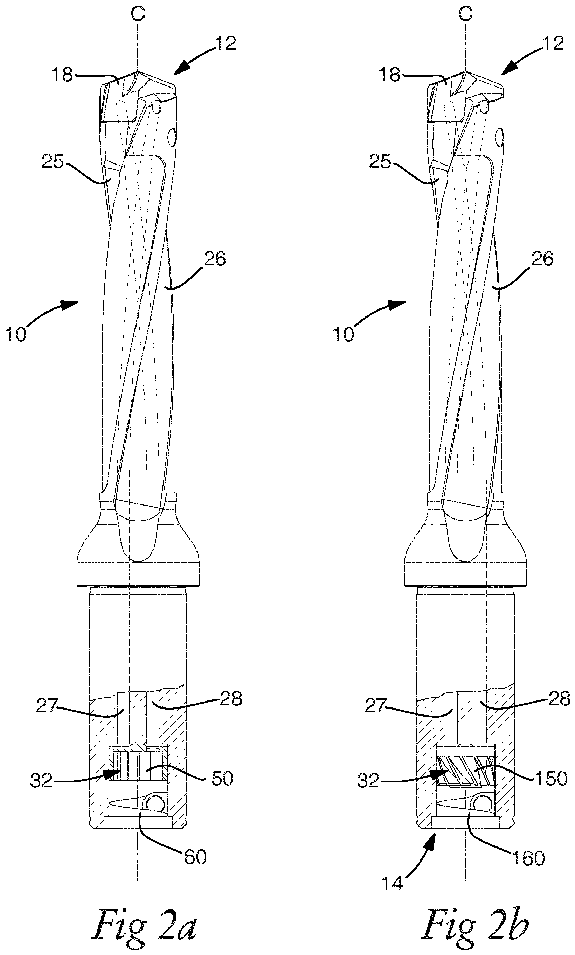

Referring now to Fig. 2a showing some of the features inside the drill 10. A first 27 and second coolant channel 28 starts at the front end of the coolant chamber 32 and terminates at, or close to, the front end 12 of the drill 10.

Terminates here means that the first and second coolant channels have their outlets at, or close to, the front end 12. Coolant will pass through the first and second coolant channels 27, 28 to cool the drill 10, the cutting insert 18 and the work piece that is being drilled. The coolant will further flush drilled chips away from the bottom of the drilled hole through the first and second chip flute 25, 26. The first and second coolant channels 27, 28 are preferably twisted in the drill 10.

The first coolant channel 27 is said to be associated with the first chip flute 25. That means that the first coolant channel 27 has its outlet close to the first chip flute 25. A majority of the coolant that flows in the first coolant channel 27 will pass through the first chip flute 25. The same applies for the second coolant channel 28 and the second chip flute 26. In an alternative embodiment the first coolant channel may have its outlet in the first chip flute. In yet another alternative embodiment the first coolant channel may have its outlet a distance from the first chip flute, but the outlet is directed towards the first chip flute. By this arrangement a majority of the flow from the first coolant channel will still reach the first chip flute. The same applies for the second coolant channel and the second chip flute.

The coolant chamber 32 occupies approximately 35 % of the length of the shank 20 and the diameter of the coolant chamber 32 is approximately 60 % of the diameter of the shank 20. The rear end of the coolant chamber 32 has a slightly larger diameter than the other parts of the coolant chamber 32. The increase in diameter is abrupt, thus creating a surface perpendicular to the rotation axis (C) to which the flow re-directing element 60 can be attached. In the coolant chamber 32 the mounted impeller 50 is seen in a cross-section together with a mounted flow re-directing element 60. The impeller 50 is positioned without being fastened to the front end of the coolant chamber 32 to be able to rotate in the coolant chamber 32. The impeller 50 has a width that is approximately equal to the diameter of the coolant chamber 32 and a length that is approximately 40 % of the longitudinal length of the coolant chamber 32. The flow re-directing element 60 is positioned at the rear end of the coolant chamber 32 and longitudinally right next to the impeller 50. The flow redirecting element 60 has a width that is approximately equal to the diameter of the coolant chamber 32 and a length that is approximately 60 % of the longitudinal length of the coolant chamber 32. The flow re-directing element is rotationally fixed against the surface of the coolant chamber 32 that is perpendicular to the rotation axis (C). Both the impeller 50 and the flow redirecting element 60 are centered around the rotation axis (C).

During use, coolant enter the inlet 62 of flow re-directing element 60 and a principally axial coolant flow will be re-directed to a principally radial flow when the coolant leaves the flow re-directing element at its outlet 64. The principally radially directed coolant then enters the impeller 50 at its inlet 52 at the rear end of the impeller 50 and hits the blades 52 positioned at the inside of the hollow cylinder of the impeller 50. Since the outlet 64 of the flow re-directing element 60 is radially offset from the rotation axis (C), the coolant will hit the blades 52 approximately perpendicularly, thus transferring a large amount of kinetic energy from the flowing coolant to the blades 52 of the impeller 50. The impeller 50 will start to rotate due to receiving this kinetic energy. The outlet 54 has the form of a truncated annulus and occupies approximately half of a full annulus. Due to this the first coolant channel 27 and the second coolant channel 28 will alternately receive coolant from the outlet 54 of the impeller 50. Each of the first 27 and second coolant channel 28 will receive coolant approximately half of the time the drill is in use. The coolant channels 27, 28 will thus receive an intermittent coolant flow in the form of short bursts of coolant. The intermittent coolant flow will lead to short increases of the pressure of the coolant in the coolant channels 27, 28. This increased pressure will also be present in the chip flutes 25, 26 associated with respective coolant channel 27, 28. This increased pressure in the chip flutes 25, 26 is effective in dislodging jammed chips in the chip flutes 25, 26 and to decrease the risk of chips getting jammed. In Fig. 2a the impeller 50 is in a rotational position such that coolant flows to the second coolant channel 28 but the first coolant channel 27 receives no coolant from the impeller. When the impeller 50 has rotated half of a full rotation the situation will be reversed.

The pressure of the coolant when entering the coolant chamber 32 from the coolant inlet is between 5 to 70 bar. Most often pressures between 10 to 30 bar are used.

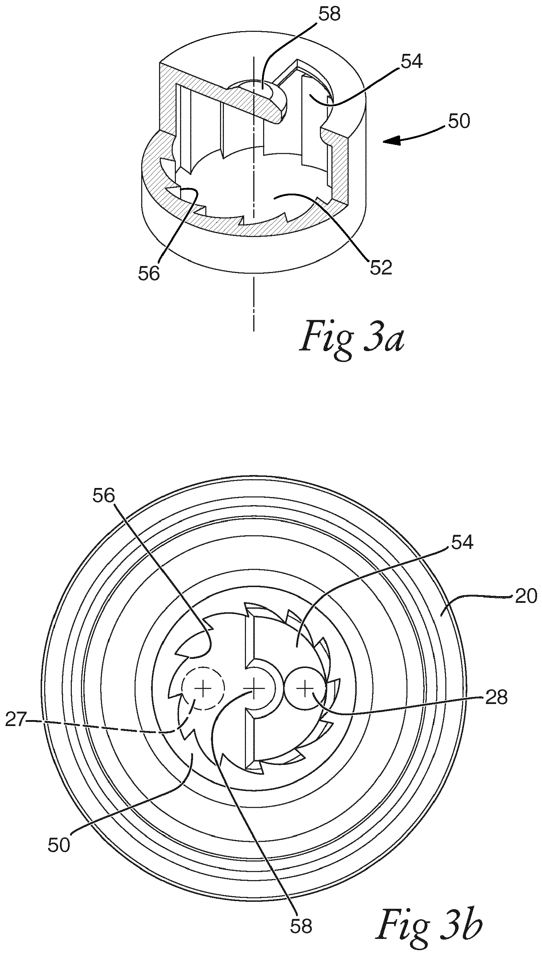

Referring now to Fig. 3a which shows a close-up of a partially cut first embodiment of impeller 50. A protrusion 58 is centrally positioned on the outside of the front end of the impeller 50. When the impeller 50 is mounted in the coolant chamber 32 of the drill 10 the protrusion will be positioned between the rear ends of the first 27 and second coolant channels 28. The protrusion 58 has the form of a truncated cone and creates a gap between the front end of the coolant chamber 32 and the front end of the impeller 50. The gap ensures that the flow of coolant through the coolant channels 27, 28 never completely stops. This is beneficial for cooling the drill and the work piece during drilling. The coolant present in the gap will also act as a lubricant to ease the rotation of the impeller 50.

Fig. 3b shows the drill 10 from its rear end 14 with the impeller 50 mounted but with the flow re-directing element 60 removed. The impeller 50 is here in a position that allows coolant to flow to the second coolant channel 28. The first coolant channel 27 will only receive a small amount of coolant passing through the gap between the front end of the coolant chamber 32 and the front end of the impeller 50.

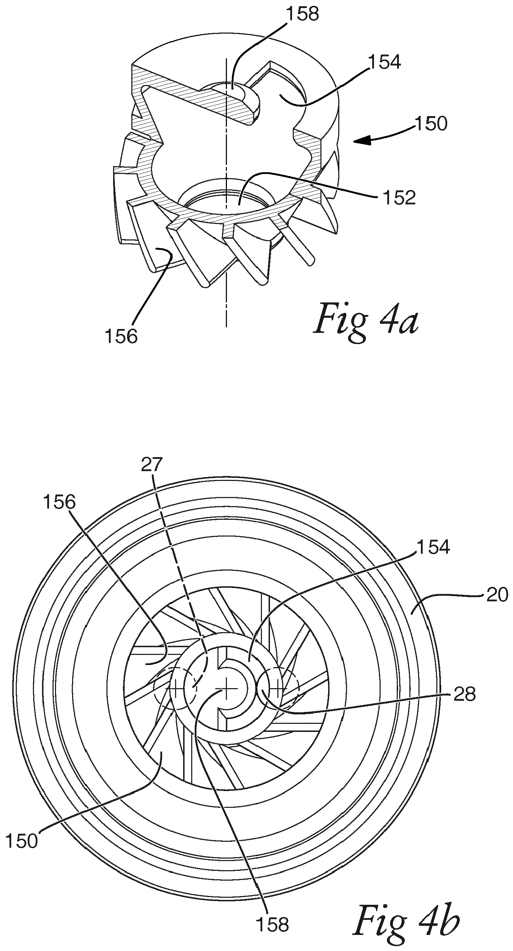

Referring now to Fig. 4a which show a second embodiment of the impeller 150. The impeller 150 has the blades 156 on the outside of the impeller 150. The impeller 150 also has blades 156 that are angled relative to the rotation axis (C). By adjusting the blades 156 angle relative to the rotation axis (C) it is possible to optimize the rotational speed of the impeller 150. Different incoming coolant pressures from the external coolant source leads to different rotational speeds of the impeller 150 and the rotational speed of the impeller can thus be optimized by altering the angle of the blades 156 relative to the rotation axis (C). Using blades 56 that are angled relative to the rotation axis (C) can also be implemented on the first embodiment of the impeller 50.

Fig. 4b shows the drill 10 from its rear end 14 with the impeller 150 mounted but with the flow re-directing element 160 removed. The impeller 150 is here in a position that allows coolant to flow to the second coolant channel 28. The first coolant channel 27 will only receive a small amount of coolant passing through the gap between the front end of the coolant chamber 32 and the front end of the impeller 150.

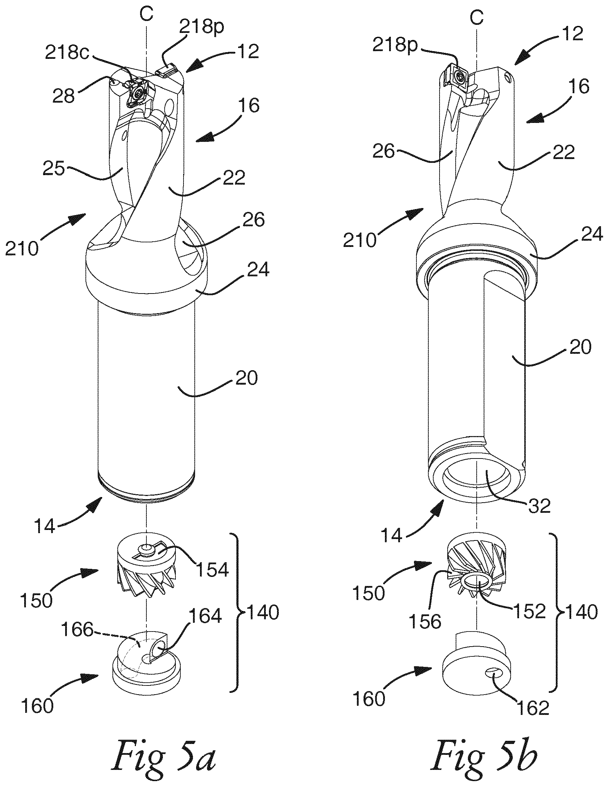

Referring now to Fig. 5 which shows another embodiment of a drill 210 according to the invention with the second embodiment of the impeller 150. Same reference numerals designate the same features, as for the embodiments described above with reference to Figs. 1-4. The drill 210 in Fig. 5 differs from the embodiment in Fig. 2b substantially only in the arrangement of cutting insert(s) at the front of the drill. More specifically, at the front end of the drill 210 two insert seats are positioned to accommodate a central insert 218c and a peripheral insert 218p where the central insert 218c is positioned closer to the rotation axis (C) than the peripheral insert 218p. These inserts 218c, 218p are usually indexable meaning that several different cutting edges can be used on the same insert 218c, 218p. The first embodiment of the impeller 50 can also be used with this type of drill 210.

The tool bodies for both types of drills 10, 210 are single-piece bodies made from one piece of material, preferably tool steel. The cutting inserts 18, 218c, 218p used with both types of drills 10, 110 are preferably made of a hard metal such as cemented carbide. The impeller 50, 150 and the flow-redirecting element 60, 160 according to both the first and the second embodiment of impeller are preferably made of a titanium alloy and due to the complexity of the elements they are preferably made by additive manufacturing.

## Claims

1. A drill (10, 210) for metal cutting machining having a central rotation axis (C) defining a longitudinal direction of the drill (10, 210) and around which the drill is rotatable, comprising:
- an axially front end (12),
- an axially rear end (14),
- an envelope surface (16) extending between the front end (12) and the rear end (14),
- a shaft (22) extending axially rearward from the front end (12),
- a shank (20) extending axially forward from the rear end (14),
- at least one cutting insert (18, 218c, 218p) releasably mounted at the front end (12),
- a first (25) and a second chip flute (26) in the envelope surface (16) of the shaft (22),
- a coolant chamber (32) inside the shank (20),
- a first (27) and second coolant channel (28) extending from the front end of the coolant chamber (32) and terminating at the front end (12) of the drill, the first coolant channel (27) is associated with the first chip flute (25) and the second coolant channel (28) is associated with the second chip flute (26),
**characterized in that** the coolant chamber (32) comprises a distributor device (40, 140) adapted to intermittently distribute coolant to the first (27) and second coolant channel (28).

2. A drill according to claim 1, **characterized in that** the distributor device (40, 140) is entirely mechanical and automatically activated by a coolant supply to the coolant chamber (32).

3. A drill according to claims 1 or 2, **characterized in that** the distributor device (40, 140) comprises a rotationally fixed flow re-directing element (60, 160), at the rear end of the coolant chamber (32), adapted to re-direct the coolant flow from a principally axial flow to a principally radial flow and a rotatable impeller (50, 150), at the front end of the coolant chamber (32), adapted to rotate when being subject to the radial flow from the flow redirecting element (60, 160).

4. A drill according to claim 3, **characterized in that** the impeller (50, 150) is a hollow cylinder with an inlet (52, 152) at its rear end and a generally arc-shaped outlet (54, 154) at its front end.

5. A drill according to claim 4, **characterized in that** the outlet (54, 154) has the form of a truncated annulus.

6. A drill according to claim 5, **characterized in that** the outlet (54, 154) occupies approximately half of a full annulus.

7. A drill according to any of claims 3 to 6, **characterized in that** the impeller (50) has blades (56), oriented to initiate rotation of the impeller (50) when subject to the radially directed coolant flow from the re-directing element (60), on the inside of the impeller (50).

8. A drill according to any of claims 3 to 6, **characterized in that** the impeller (150) has blades (156), oriented to initiate rotation of the impeller (150) when subject to the radially directed coolant flow from the flow re-directing element (160), on the outside of the impeller (150).

9. A drill according to claims 7 or 8, **characterized in that** the blades (56, 156) are positioned at a non-zero angle relative to the rotation axis (C).

10. A drill according any of claims 3 to 9, **characterized in that** the flow redirecting element (60, 160) has an axially directed inlet (62, 162) at its rear end, a radially directed outlet (64, 164) at its front end, and a flow tube (66, 166) connecting the inlet (62, 162) and the outlet (64, 164).

11. A drill according to claim 10, **characterized in that** the outlet (64, 164) of the flow re-directing element (60, 160) is radially offset from the rotation axis (C).

12. A drill according to any of claims 3 to 11, **characterized in that** the front end of the impeller (50, 150) has a central protrusion (58, 158) on the outside of the impeller (50, 150).

13. A drill according to claim 12, **characterized in that** the protrusion (58, 158) has the shape of a truncated cone.

14. A drill according to any of the previous claims, **characterized in that** the drill (10) has two axially extending arms (34) at its front end (12), the arms (34) spaced apart about the rotation axis (C) as to define a jaw (36), the cutting insert (18) releasably mounted within the jaw (36) between the arms (34).

15. A drill according to any of claims 1 to 13, **characterized in that** the drill (210) has a central cutting (218c) insert releasably mounted in an insert seat and a peripheral cutting insert (218p) releasably mounted in an insert seat.
